## Europäisches Patentamt

## European Patent Office

## Office européen des brevets

(19)

(11) Veröffentlichungsnummer: **0 107 107**
**B1**

(12)

# EUROPÄISCHE PATENTSCHRIFT

(45) Veröffentlichungstag der Patentschrift:
14.01.87

(51) Int. Cl.⁴: **A 01 N 25/12**

(21) Anmeldenummer: **83109801.7**

(22) Anmeldetag: **30.09.83**

(54) Granuliertes Pflanzenschutzmittel und Verfahren zur Herstellung.

(30) Priorität: **04.10.82 US 432561**
**05.07.83 US 510635**

(43) Veröffentlichungstag der Anmeldung:
**02.05.84 Patentblatt 84/18**

(45) Bekanntmachung des Hinweises auf die Patenterteilung:
**14.01.87 Patentblatt 87/3**

(84) Benannte Vertragsstaaten:
**DE FR GB NL**

(56) Entgegenhaltungen:
**EP-A-0 003 302**
**US-A-3 137 618**
**US-A-3 235 452**

(73) Patentinhaber: **ITT INDUSTRIES INC., 320 Park Avenue, New York, NY 10022 (US)**

(72) Erfinder: **Viets, Alan Kelvin, 3607 Portage Avenue, Madison Wisconsin 53704 (US)**
Erfinder: **Ferguson, Fred Eugene, 18312 Paver-Barnes Road, Marysville Ohio 43030 (US)**
Erfinder: **Kageyama, Milton Etsuo, 19275 U.S. Route 33, Marysville Ohio 43030 (US)**

(74) Vertreter: **Morstadt, Volker, Dipl.- Ing., c/o Deutsche ITT Industries GmbH Patent/Lizenzabteilung Postfach 840 Hans- Bunte- Strasse 19, D-7800 Freiburg/Brsg. (DE)**

**Beschreibung**

Die Erfindung betrifft ein granuliertes Pflanzenschutzmittel mit gesteigerter Wirkstofffreigabe sowie ein Verfahren zu dessen Herstellung.

Pflanzenschutzmittel werden häufig als flüssige Ansätze aufgebracht, in dem wässrige Lösungen von emulgierbaren Konzentraten, Emulsionen oder benetzbare Pulver gemischt werden, welche den eigentlichen aktiven Anteil an Pflanzenschutzmittel enthalten. Emulgierbare Konzentrate sind Flüssigkeiten, die einen Pflanzenwirkstoff, ein organisches Lösungsmittel und ein oder mehrere oberflächenaktive Stoffe als Emulgatoren enthalten. Benetzbare Pulver sind Feststoffe mit einem Gehalt an Pflanzenschutzmittel plus einem benetzenden und dispergierenden Stoff zur Unterstützung der Suspensionsbildung des Pulvers in Wasser. In der US-PS 43 10 520 wird ein sogenanntes "verfestigtes emulgierbares Konzentrat" offenbart, bei dem ein flüssiges emulgierbares Konzentrat auf gepulverter Cellulose absorbiert ist. Das Pulver ergibt nach dem Verdünnen mit Wasser eine stabile Emulsion, die in der üblichen Weise, z.B. durch Aufsprühen, aufgebracht werden kann. Weitere flüssige Ansätze von Pflanzenschutzmitteln beschreiben die US-Psen 36 83 078 und 40 61 077.

Darüberhinaus kennt man Pflanzenschutzmittel die zur Aufbringung in granulierter Form vorgesehen sind. Man stellt sie her durch Aufsprühen des eigentlichen Wirkstoffs auf einen Träger in gelöster Form oder in, dem man sie mit Hilfe eines Haftmittels an ihn bindet. In der US-PS 38 49 105 wird ein derartiges Pflanzenschutzmittel beschrieben. Der eigentliche pestizide Wirkstoff kann anfänglich in Form eines technischen Materials (eine hohe Konzentrationsform des Pflanzenschutzmittels), eines emulgierbaren Konzentrats oder eines benetzbaren Pulvers vorgelegen haben. Derartige granulierte Pflanzenschutzmittel erfordern jedoch häufig hohe Anwendungsmengen des eigentlichen Wirkstoffs im Vergleich zu einer Aufbringung desselben in flüssiger Form. Dies beruht auf der physikalischen oder chemischen Bindung des aktiven Wirkstoffs an dem Träger, wodurch die Freigabe des Wirkstoffes behindert wird. In manchen Fällen sind höhere Aufbringungsmengen erforderlich wegen des physikalischen Problems der Erzielung einer entsprechenden Verteilung des Wirkstoffs auf der Trägerfläche, wie es bei blattaktiven Pflanzenschutzmitteln der Fall ist.

Hier will die Erfindung Abhilfe schaffen. Die Erfindung, wie sie in den Ansprüchen gekennzeichnet ist, löst die Aufgabe, ein granuliertes Pflanzenschutzmittel mit verstärkter Wirkstofffreigabe anzugeben, das in den gleichen Mengen wie ein entsprechender flüssiger Ansatz aufgebracht werden kann. Des weiteren soll ein Verfahren zur Herstellung eines solchen Pflanzenschutzmittels angegeben werden.

Die durch die Erfindung erreichten Vorteile liegen in der Erzielung eines granulierten Pflanzenschutzmittels mit ungewöhnlich hoher Wirkstofffreigabe. Das Pflanzenschutzmittel kann in den meisten Fällen in der gleichen Menge angewendet werden wie ein flüssiges Produkt. Das granulierte Pflanzenschutzmittel nach der Erfindung besteht aus einem Träger in granulierter Form, dessen Teilchengröße zwischen 210 und 2000 µm liegt, wobei auf der Oberfläche eines jeden Teilchen desselben ein gepulverter pestizider Wirkstoff anhaftet. Das pestizide Mittel besteht dabei aus dem eigentlichen wasserunlöslichen Pestizid in flüssiger Form und einem Tensid, das in den Poren eines fein zerkleinerten inerten pulvers absorbiert ist, dessen Gesamtgewicht, bezogen auf den Pestizidansatz, 35 bis 66 Gew.% beträgt und dessen Teilchengröße zwischen 4 und 150 µm liegt. Das Tensid liegt in einer Menge von mindestens 75 Gew.% bezogen auf pestizid, und 12 bis 45 Gew.%, bezogen auf die Gesamtmenge des Pflanzenwirkstoffes, vor. Aus den Größenangaben ergibt sich, daß die Teilchen des inerten Pulvers wesentlich kleiner als die des Trägergranulats sind und somit eine wesentlich größere Absorbtionsfähigkeit gegenüber diesen besitzen.

Aus der EP-A 3 302 ist ein Verfahren zur Herstellung staubfreier Pflanzenschutzmittelgranulate sowie eine Vorrichtung zur Durchführung des Verfahrens bekannt. Dabei wird ein Träger von z.B. Quarzsand einer bestimmten Körnung mit einer Klebelösung überzogen und darauf eine Mischung aus Pestizid, Träger und Dispergiermittel gegeben. Nach gründlicher Mischung wird der Trocknungsprozeß eingeleitet. Das Problem ist dabei die Erzielung eines Granulates hoher Abriebfestigkeit; die Geschwindigkeit und Stärke der Wirkstofffreigabe wird dabei nicht angesprochen.

Das erfindungsgemässe Verfahren umfaßt die Herstellung eines gepulverten Pflanzenschutzmittels, wobei der eigentliche pestizide Wirkstoff in flüssiger Form mit einem Tenside und fein zerkleinerten inerten Pulver unter Ausbildung eines pulverförmigen Pflanzenschutzmittels vermischt wird, der pestizide Wirkstoff und das Tenside sind dabei in den Poren des Pulvers absorbiert. Die Mengenverhältnisse entsprechen den oben angegebenen. Das pulverförmige pestizide Gemisch wird auf der Oberfläche des Trägergranulats aufgebracht, wobei die Teilchen des innerten Pulvers wesentlich kleiner sind und eine wesentlich höhere Absorbtionsfähigkeit besitzen als das Trägergranulat.

Das Granulat nach der Erfindung läßt sich mit einer Vielzahl von Pestiziden, eingeschlossen Herbizide, Insektizide, Fungizide und Pflanzenwachstumsregulatoren anwenden. In der Tat eignet sich jedes in flüssiger Form vorliegende Pestizid, das in Wasser unlöslich und in einem nicht wässrigen Medium löslich ist, zur Anwendung bei der Erfindung. Eine besonders geeignete Klasse von Insektiziden sind die synthetischen Pyrethroide. Es können jedoch auch andere Insektizide wie z.B. Diazinone (0,0-Diethyl-o-[2-isopropyl-6-methyl pyrimid-4-yl]-thionophosphat) verwendet werden, Ein geeignetes Fungizid ist Iprodion und geeignete Herbizide sind Oxyfluorfen, Triclopyr und Napropamid. Einsetzbare Pflanzwuchsstoffregulatoren sind Mefluidid, die Bezeichnungen sind dem "Pesticide Manual", veröffentlich von dem British Crop Protection Council, 7. edition, 1983, entnommen, und Triazole, wie sie in der US-PS 42 43 405 genannt werden, insbesondere die Verbindung 1-t-Butyl-2-(1,2,4-triazol-1-yl)-2-p-chlorbenzyläthanol. Verschiedene Faktoren werden als kritisch für den Erfolg des granulierten Pflanzenschutzmittels nach der Erfindung angesehen. Das pulverförmige Pestizid, d.h. das an der Oberfläche des Granulat anhaftende Pestizid enthält eine ungewöhnlich hohe Menge an Tensid. Derartige Mittel wurden schon früher bei der Herstellung von granulierten Pflanzenschutzmitteln verwendet, jedoch weder in den Mengen noch zu dem in der Anmeldung angegebenen Zweck. Die Pflanzenschutzmittel nach der Erfindung enthalten jeweils ein Tensid in einer Menge von 75 bis 400Gew.% des eigentlichen Wirkstoffs. Wo sehr geringe Wirkstoffmengen verwendet werden, kann der Prozentgehalt sogar die 400 übersteigen, vorausgesetzt wodurch sichergestellt ist, daß das Tensid im Bereich von 12 bis 45 Gew.% auf die Gesamtmenge an gepulvertem Pestizid verwendet wird. Beim Stand der Technik wurde das Tensid wegen seiner dispergierenden oder emulgierenden Funktion verwendet. In der vorliegenden Erfindung wirkt es ebenfalls als Emulgator, aber zusätzlich trägt es zu der sehr hohen Freigaberate des eigentlichen Wirkstoffes gegenüber den Pflanzen oder dem Boden bei. Das vorliegende Pflanzenschutzmittel wird so benutzt, daß ca. 10 bis 25g von Tensiden auf je 929 qm mit Pestizid behandelter Fläche entfallen. Ein geringerer Anteil ergibt keine entsprechende Wirkstofffreigabe, höhere Anteile erhöhen die Gefahr der Phytotoxie. Ein weiteres Merkmal der Erfindung, das für die verstärkte Wirkstofffreigabe verantwortlich ist, ist das Vorhandensein des gepulverten Pestizides auf der Oberfläche des Trägergranulats. Der granulierte Träger hat eine höhere Dichte, geringere Absorbtionsfähigkeit und größeren Teilchenumfang als das inerte Pulver. Obgleich der flüssige Wirkstoff und das Tensid in den Poren des fein zerteilten innerten Pulvers absorbiert sind, so sitzt die resultierende pulverförmige Mischung mit dem Wirkstoff auf der Oberfläche des Trägergranulats. Das resultierende Produkt, ein fester mit Pulver überzogener Träger, gibt den Wirkstoff nach dem Aufbringen leicht an die Pflanzen oder den Boden ab. Zusätzlich zu dem Anteil an Tensid erfordern beste Resultate auch die Anwesenheit eines nichtionischen Tensid oder die eines vornehmlich nichtionischen Tensid gemischt mit einem anionischen. Geeignete Beispiele von nichtionischen Tensid sind äthoxylierte gradkettige Alkohole wie Laurylalkohol mit 12 mol eines Äthylenoxidadduktes, Kondensationsprodukte von Propylenoxid und anderen Äthylen- oder Propylenglykolen (im Handel unter dem Namen Pluronic) äthoxylierte Nonylphenole mit 9 bis 10 mol Äthylenoxidaddukt, äthoxylierte Octylphenole mit 7 bis 8 mol Äthylenoxidaddukt (Handelsname Triton X114), äthoxylierte Sorbitverbindungen mit 20 mol Äthylenoxidaddukt (Handelsmarke Tween 80), nicht-äthoxylierte Sorbitverbindungen wie Sorbittrioleat, äthoxylierte Tridecylalkohol mit 12 mol Äthylenoxidaddukt, äthoxyliertes Rizinusöl mit 25 mol Äthylenoxidaddukt, Polyglycolester wie Dioleat mit Polyäthylenglykoladdukt, Molgewicht 300, äthoxylierte sekundäre Alkohole wie z.B. ein verzweigter Alkohol mit 15 C-Atomen und 3 mol Äthylenoxidaddukt, Polyalkylenglykoläther, Acetylenglykole wie z.B. 2,4,7,9-tetra-methyl-5-decyn-4,7-diol, Kondensationsprodukte derartiger Glykole mit Äthylenoxid, äthoxylierte Tallölabkömmlinge wie das Monooleat mit 14 mol von Äthylenoxidaddukt, entsprechende Derivate mit Polyäthylenglykoladdukten wie das Bioleat mit einem Polyäthylenglykoladdukt von einem Molekulargewicht 200. Ein besonders geeignetes Beispiel eines anionischen Tensid, das zusammen mit den erwähnten nichtionischen verwendet werden kann, ist Kalziumdodecylbenzolsulfonat. Die Tenside sollten in einer Menge von mindestens 75 Gew.%, vorzugsweise mindestens 100 Gew.% bezogen auf den eigentlichen Wirkstoff angewendet werden. Häufig werden sie in einer 2 bis 3fachen Gewichtsmenge des eigentlichen Pestizids eingesetzt, wobei die Menge bis zu dem vierfachen oder noch darüber hinausgehen kann. Das Tensid sollte auch in einer Menge von 12 bis 45 Gew.% des gepulverten Pestizidansatzes vorliegen.

Das fein zerteilte inerte Pulver muß mehr absorbieren als der Träger, muß gegenüber den Bestandteilen des Ansatzes innert sein und eine Teilchengröße haben, die merklich unter der des Trägers liegt. Die Teilchengröße sollte kleiner sein als die des Trägers, aber groß genug, das die Teilchen nicht in den Poren desselben absorbiert werden. Die Teilchengröße sollte für gewöhnlich unter 150 μm liegen, üblicherweise in einem Bereich von 40 μm oder darunter bis zu 150 μm. Das Pulver ist für gewöhnlich ein Silikatmaterial und enthält vorzugsweise einen hohen Anteil an SiO2. Ein Beispiel für ein besonders geeignetes inertes Pulver ist ein feines pulverförmig abgeschiedenes wasserhaltiges SiO2. Es besteht aus 87,5% SiO2 in einer 5%igen wässrigen Suspension, besitzt einen pH von 6,5 bis 7,3, die höchste Teilchengröße liegt bei 0,022 μm, der Refraktionsindex beträgt 1,46 und die Oberfläche 140 bis 160 qm/g. Es wird unter den Handelsnamen Hi-Sil 233 verkauft. Der Anteil an in erten Pulver auf das Gesamtgewicht des pulverförmigen Pestizidansatzes liegt bei 35 bis 66 Gew.%. Ist der pestizide Wirkstoff eine Flüssigkeit, so ist ein Lösungsmittel überflüssig. Ist der pestizide Wirkstoff ein Feststoff, sollte er in Verbindung mit einem organischen Lösungsmittel verwendet werden, entweder einem polaren oder nichtpolaren je nach der Löslichkeit des Wirkstoffes. Geeignete Beispiele für nichtpolare Lösungsmittel sind Mineralsprit, Xylol und schwere aromatische Naphtaverbindungen. Beispiele für polare Lösungsmittel sind Cyclohexanon, Isophoron, Diäthylenglykolmethyläther, Dimethylformamid und Tetrahydrofuran. Die Lösungsmittel sollten in Mengen von 5 bis 115 Gew.% des pestiziden Wirkstoffes eingesetzt werden.

Der Träger ist vorzugsweise ein Stoff mit verhältnismäßig hoher Dichte wie z.B. zerkleinerte Maiskolben, Ton, Diatomenerde oder Walnusschalen. Gemahlener Stickstoffdünger kann ebenfalls als Träger verwendet werden, sofern er weniger absorbiert und seine Teilchen größer sind als die des innerten Pulvers. Das Verhältnis von Pestizidenansatz zu dem Träger liegt vorzugsweise zwischen 0.05 und 0,15. Der Hauptanteil der Trägerteilchen sollte größer als 210 μm sein, wobei die Maximalgröße bei 2000 μm liegen soll.

Eines der üblichen, die Haftung von pestiziden Ansätzen an Trägern vermittelndes Haftmittel wird bei der Aufbringung des pulverförmigen pestiziden Ansatzes auf der Oberfläche der Trägergranulate verwendet. Geeignete Haftmittel sind niedrige aliphatische Glykole wie Äthylen-, Propylen-, Diäthylen-, Dipropylen und Hexylenglykol. Andere Haftmittel sind Polyäthylenglykol und Polypropylenglykol. Auch die in der US-PS 3 705 794 genannten Haftmittel können verwendet werden, ihr Anteil an dem Granulat sollte zwischen 5 und 25 Gew.% liegen.

Ergebnisse von Freilandtests zeigen, daß die granulierten Pflanzenschutzmittel nach der Erfindung einen Wirkungsgrad besitzen, der merkmlich über den von emulgierbaren Konzentraten und benetzbaren Pulvern liegen, die den gleichen Wirkstoffgehalt aufweisen.

Die Ansätze werden durch Mischen des flüssigen pestiziden Wirkstoffs, üblicherweise in seiner technischen Form, mit einem Lösungsmittel und dem Tensid hergestellt. Zu der flüssigen Mischung wird dann das innerte Pulver zugefügt und das Ganze solang gemischt, bis die Flüssigkeit in den Poren des Pulvers absorbiert ist. Der Träger wird mit den pulverförmigen pestiziden Ansatz gemischt und das Haftmittel dann zugefügt und solange untergemischt, bis die Oberfläche des Trägergranulats überzogen ist.

Die folgenden Beispiele dienen zur Erläuterung der Erfindung, sofern nicht anders angegeben, beziehen sich alle Teile und Prozentangaben auf das Gewicht. Das Wort Tensid wird mit TSD abgekürzt.

**Beispiel 1**

Als aktiver pestizider Bestandteil diente ein synthetisches pyrethroides Insektizid, bekannt als Fenvalerat. Der gepulverte pestizid wirkende Ansatz wurde aus folgenden Bestandteilen hergestellt:

|  | $\underline{\%}$ |
|---|---|
| 71,6% Fenvalerat | 13.97 |
| TSD | 40.00 |
| wasserhaltiges SiO2 | 46,03 |

Das Fenvalerat war ein käufliches technisches Produkt des Insektizids in einem aromatischen Lösungsmittel, zu kaufen unter dem Handelsnahmen Pydrin. Die chemische Bezeichnung für dieses Pyrethroid ist Cyano-(2-phenoxy-phenyl)-methyl-4-chlor-alpha-(1-methyläthyl)-benzolacetat. Die Verwendung von 13,97 % des 71,6 prozentigen Konzentrats schließt 10% von Fenvalerat bei dem pestiziden Ansatz ein. Das Tensid war eine Mischung aus 8% Atlox 3454F und 32% Atlox 3453F, beide Handelsnamen für Mischungen von anionischen Kalziumdodecylbenzolsulfonaten und nichtionischen Alkylphenol mit 8 bis 9 C-Atomen, äthoxyliert mit 7 bis 10 mol Äthoxylgruppen. Atlox 3453F hat einen hohen nichtionischen Anteil, 3454F einen hohen anionischen Anteil. Das wasserhaltige SiO2 war Hi-Sil 233. Das Fenvalerat und das Tensid wurden miteinander vermischt und auf das fein gepulverte, hochabsorbierende wasserhaltige Siliciumdioxid aufgesprüht. Die Poren desselben nehmen die aufgesprühten Produkte auf und man erhält somit einen gepulverten pestizid wirkenden Ansatz. 240,67g desselben, 4,54 kg Maiskorn als Träger, die Teilchengröße desselben lag dabei zwischen 1,41 und 0,42 mm, und 435 ml Hexylenglykol wurden gemischt, so daß der pulverförmige Ansatz auf der Oberfläche des Trägergranulates haftete.

Ein benetzbares Pulver und ein emulgierbares Konzentrat, daß das gleiche aktive Insektizid enthielt, wurden dann auf einen Träger aus Vermikulit oder Maiskolben aufgebracht, wobei die gleichen Mengen an Hexylenglykol verwendet wurden. Man erhielt somit ein granuliertes Produkt mit den gleichen Mengenverhältnissen an Fenvalerat. Das emulgierbare Konzentrat wurde sowohl mit wie ohne Siliciumdioxidpulver aufgebracht. 374 mg jedes Ansatzes wurde mit 250 ml Wasser extrahiert. Dies entspricht 4,54g aktiver Substanz auf 378 l Wasser. Die Wasserextraktion jedes Ansatzes wurde in einen Becher gesprüht, der 10 Kohlspannerraupen enthielt. Die Tests wurden dreimal mit jedem Ansatz wiederholt. Nach drei Tagen wurde die Sterblichkeit wie folgt registriert:

4

| Granulatansatz | Erfolgsquote in % |
|---|---|
| benetzbares Pulver (Vermikulit) | 5.0 |
| emulgierbares Konzentrat (kein SiO2) (Maiskolben) | 52.0 |
| emulgierbares Konzentrat (mit SiO2 Pulver)(Maiskolben) | 23.0 |
| emulgierbares Konzentrat (kein Sio2 Pulver)(Vermikulit) | 63.0 |
| Erfindung (Beispiel ) (Maiskolben) | 95.0 |

Zur Bestätigung der Laborergebnisse wurden vergleichbare Ansätze in einem Feldversuch bei der Bekämpfung von Getreidewanzen geprüft. Die Ansätze wurden auf 2 x 6 qm St.Augustinrasen in einer Menge von 0,11 g/qm an Wirkstoff aufgebracht. Die höchste Zahl an Getreidewanzen lag bei 71 Stück/0,93 qm. Eine Zählung nach einer Woche nach der Aufbringung ergab die folgenden Ergebnisse:

| Granulatansatz | Erfolgsquote in % |
|---|---|
| benetzbares Pulver (Maiskolben) | 0 |
| emulgierbares Konzentrat (Vermikulit) | 26 |
| emulgierbares Konzentrat (Maiskolben) | 39 |
| Erfindung Beispiel 1 (Maiskolben) | 93 |

**Beispiel 2**

In diesem Beispiel wurde ein Fungizid, bekannt als Iprodion, als pestizider Wirkstoff eingesetzt. Ein gepulverter pestizider Ansatz mit einem Gehalt an 20% Iprodion wurde mit den folgenden Bestandteilen hergestellt:

| | % |
|---|---|
| 98,8% Iprodion | 20.43 |
| Methylcarbitol | 23.16 |
| TSD | 17.58 |
| wasserhaltiges SiO2 | 38.83 |

Das Iprodion war ein technisches Produkt, das Methylcarbitol wurde als Lösungsmittel für den pestiziden Wirkstoff zugesetzt. Als TSD wurde T-Det N-9.5 eingesetzt, dies ist ein Nonylphenol mit 9,5 mol Äthoxylgruppen. Das wasserhaltige SiO2 war wie üblich Hi-Sil 233. Das Iprodion, Methylcarbitol und OBM wurden auf 75°C erhitzt und dann auf das Silikatpulver gesprüht, wo es in die Poren desselben eindrang und den pulverförmigen pestiziden Ansatz bildete. 351g davon, 6,8 kg Maiskolben (die Größe der Mehrzahl der Granulate lag zwischen 0,84 und 0,42 mm) und 400 ml Hexylenglykol wurden bei der Herstellung des granulierten Produktes verwendet, das in einer Menge von 14 g Wirkstoff /929 qm aufgebracht wurde.

In der Bekämpfung von Blattfleckenkrankheit (Dollar Spot) wurden mit obigem Ansatz Wirksamkeitsstudien durchgeführt, und zwar mit einem Granulat das Iprodion in Form eines 50%igen benetzbaren Pulvers enthielt. Die Ergebnisse waren wie folgt:

| Granulatansatz | Erfolgsquote in % |
|---|---|
| 50% benetzbares Pulver | 28-45 |
| Erfindung (Beispiel 1) | 87-96 |

**Beispiel 3**

Ein pulverförmiger pestizider Ansatz mit dem Herbizid Oxyfluorfen hatte die folgende Zusammenstellung:

| | % |
|---|---|
| Oxyfluorfen 75% | 36.57 |
| TSD | 25.48 |
| wasserhaltiges SiO2 | 37.95 |

Das Oxyfluorfen war ein käufliches technisches Produkt, daß unter dem Namen Goal im Handel ist. Tensid und Silikatpulver waren die gleichen wie im Beispiel 2. 392 g dieses Ansatzes wurden zusammen mit 2,7 kg Maiskolben (Granulatgröße wie oben angegeben) und 200 ml Hexylenglykol zu Erstellung eines granulierten Produktes benutzt. Es wurden Gewächshausuntersuchungen durchgeführt, wobei der Ansatz in einer Menge von 0,224 g/qm an Wirkstoff zur Bekämpfung von Common Groundsel, Prostrate Spurge, Common Chickweed, Large Crabgrass, Annual Bluegrass und Bittercress. Die gleiche Wirkung erzielte man mit diesem Ansatz im Vergleich zu einem weiteren Ansatz, bei dem das gleiche Herbizid über ein Lösungsmittel auf nichtkalziniertem Attapulgitton aufgebracht war. Das besondere bei diesem Ergebnis liegt darin, daß die nichtkalzinierten Tonteilchen dafür bekanntn sind, daß sie auseinanderfallen und über eine Fläche ausbreiten, was bei den

6

Maiskolben nicht der Fall ist. Diese Studie zeigt die Fähigkeit der Wirksubstanz im Rahmen des Ansatzes aus dem Maiskolbenträger herauszuwandern.

Mit dem Insektizid Fenvalerat und dem Fungizid Iprodion wurden eine Reihe von Vergleichstests durchgeführt, um die Freigaberate der vorliegenden Ansätze mit denen ähnlicher Ansätze zu vergleichen, die außerhalb des Rahmens der Erfindung liegen und die verfestigte emulgierbare Konzentrate nach der genannten US-PS 43 10 520 enthalten. Dieses Patent offenbart ein verfestigtes emulgierbares-Konzentrat, das eine Mischung aus Tensid enthält, die zur Verwendung mit Wasser vorgesehen sind. Das verfestigte Konzentrat nach diesem Patent wurde auf einen Träger aufgebracht und seine Freigaberate mit der von herkömmlichen emulgierbaren Konzentraten verglichen, die auf dem gleichen Träger zusammen mit dem Granulatansatz nach der Erfindung aufgebracht wurde. Andere Vergleichstests wurden mit Ansätzen gemacht, die ähnlich den hier Beanspruchten waren, die jedoch TSD in Mengen unter dem kritischen Minimalpegel enthielten. Die Herstellung und die Prüfung dieser Ansätze sind in den Beispielen 4 bis 9 ausgeführt.

**Beispiel 4**

Ein für den Stand der Technik typischer Granulatansatz enthielt 0,5% Wirkstoff und war aus einem herkömmlichen Fenvalerat enthaltenden emulgierbaren Konzentrat aus den folgenden Bestandteilen hergestellt.

| | |
|---|---|
| Fenvalerat EC 30.4% | 42.83 g |
| Maiskolbenträger | 2.27 kg |
| Hexylenglykol | 217.5 ml |

Das Fenvalerat war ein käufliches emulgierbares Pydrinkonzentrat, das ca. 5 bis 15% TSD bezogen auf das Gesamtgewicht einschl. des Trägers enthielt. Die Teilchenqröße des Maiskolbengranulats lag in der Größenordnung von 0,84 bis 0,42 mm. Das Hexylenglykol und das Fenvalerat wurden vermischt und die Lösung auf den Maiskolbenträger aufgesprüht. Dieser Ansatz wurde in das Versuchsprogramm aufgenommen, um das Auswaschtestverfahren zu bestätigen und die Unterschiede in den Freigaberaten zwischen einem typischen granulierten Ansatz und einem mit verstärkter Freigaberate nach der Erfindung quantitativ zu erfassen.

**Beispiel 5**

Ein granulierter Ansatz wurde aus verfestigtem emulgierbaren Konzentrat nach der US-PS 4 310 520 aus den folgenden Bestandteilen hergestellt:

| | |
|---|---|
| Fenvalerat EC 93% | 225g |
| gepulverter Cellulose | 450g |
| TSD | 67.5g |

Das TSD war eine Mischung aus 47.25g von Atlox 3403F und 20.25g von Atlox 3404F, beides Handelsmarken für eine Mischung von Kalziumdodecylbenzolsulfonaten und einem nichtionischen TSD. Wie bereits oben erwähnt, besitzt 3403F einen hohen nichtionischen Anteil, dagegen 3404F einen hohen anionichen Anteil. Die gepulverter Cellulose war ein Produkt, das unter dem Handelsnamen Solka Flok BW 40 verkauft wird und ein Cellulosepulver darstellt, dessen Teilchengröße bei 0,354 mm liegt. Das Fenvalerat und das TSD wurden vermischt und auf das Cellulosepulver aufgesprüht. Der Anteil des einzelnen TSD und die Gesamtmenge derselben ist in dem Patent angeführt. Die Gesamtmenge an TSD betrug bezogen auf den Wirkstoff 30 Gew%, was der Maximalmenge nach dem Patent entspricht. Die Menge an anionischen TSD (Atlox 3404F) betrug 30Gew% der gesamten Menge an TSD und lag damit in dem bevorzugten von dem genannten Patent festgesetzten Bereich; 21,4g dieses Materials wurde zur Herstellung des granulierten Ansatzes verwendet, der 0,5% Wirkstoff enthielt und durch trockenes Vermischen mit 1,05 kg Maiskolbenträger unter Verwendung von 100,5 ml Hexylenglykol als Haftmittel hergestellt wurde. Die Teilchengröße von Maiskolbenträger entsprach der aus Beispiel 4.

**Beispiel 6**

Entsprechend der Erfindung wurde aus den nachfolgenden Bestandteilen ein granulierter Ansatz hergestellt:

| | |
|---|---|
| Fenvalerat 92.3% | 28.21 g |
| TSD (Atlox 3445F 20.83 g) (Atlox 3453F 83.33 g) | 104.16 g |
| wasserhaltiges SiO2 | 108.30 g |

240.67 g des obigen gepulverten Pestizidansatzes wurde auf 4.54 kg eines Maiskolbenträgers, Teilchengröße wie oben, mittels 435 ml Hexylenglykol aufgebracht.

Die granulierten Träger der Beispiele 4, 5 und 6 wurden dann auf ihre Freigaberaten getestet, jeweils eine bestimmte Menge eines jeden Ansatzes wurde auf ein feinmaschiges Sieb mit einer Kantenlänge von 60 x 182 cm ausgebreitet, was einer einmaligen Aufbringung auf Rasen entspricht. Anschließend wurde Wasser 15 Minuten lang darübergesprüht, was einer Regenmenge von 6 mm entspricht. Das Wasser wurde gesammelt und die Proben zur Bestimmung der Menge an ausgelaugtem Wirkstoff analysiert. Die Ergebnisse lauteten wie folgt:

| Beispiel | mg/l Wirkstoff |
|---|---|
| 4 EC | 1.45 |
| 5 verfestigtes EC | 2.00 |
| 6 Erfindung | 6.20 |

Die Ergebnisse zeigen, daß merklich mehr Wirkstoff von dem granulierten Träger nach der Erfindung freigegeben wurde als aus dem emulgierbaren Konzentrat und den verfestigten emulgierbaren Konzentrat, beide nach dem Stand der Technik. Freilandversuche mit dem Ansatz nach Beispiel 4 zeigten im wesentlichen keine Aktivität, die Versuche mit dem Beispiel 6 erbrachten eine hohe insektizide Wirkung.

**Beispiel 7**

Ein gepulverter Ansatz mit Iprodion wurde aus den folgenden Bestandteilen hergestellt:

| Iprodion 95.5%       | 322,80 g |
| Methylcarbitol       | .525,53 g |
| TSD                  | 96,86 g |
| wasserhaltiges SiO2  | 600,00 g |

Das TSD war T-Det 9.5 und das wasserhaltige SiO2 Hi-Sil 233. Das technische Iprodion wurde in dem Methylcarbitol in Anwesenheit des TSD gelöst und die Lösung auf das wasserhaltige SiO2 gesprüht. Dieser pulverförmige Pestizidansatz unterscheidet sich von denen nach der Erfindung nur darin, daß der Gehalt an TSD 30% des Wirkstoffes beträgt, d.h. dem in der genannten US-PS 43 10 520 angegebenen Menge entspricht und unter dem in der vorliegenden Anmeldung beanspruchten Minimalgehalt liegt. 51,6 g dieses Ansatzes wurden trocken mit 1 kg Maiskolbenträger unter Verwendung von 58,67 g Hexylenglykol als Haftmittel vermischt.

**Beispiel 8**

Ein iprodionhaltiges emulgierbares Pulver wurde entsprechend der Lehre der oben genannten US-PS aus den folgenden Bestandteilen hergestellt:

| Iprodion 95,5%       | 85,62 g |
| Methylcarbitol       | 148,48 g |
| TSD                  | 25,69 g |
| (Atlox 3404F   7.71 g) | |
| (Atlox 3403F  17.98 g) | |
| Cellulosepulver      | 450.00 g |

Die anionischen und nichtionischen TSD wurden in den dem genannten Patent angegebenen Mengen zusammen mit gepulverter Cellulose verwendet, wie sie in dem Patent spezifiziert ist (BW-40). Eine Menge von 90,42 g dieses emulgierbaren Pulvers wurde auf 1,0 kg eines Maiskolbenträgers, Teilchengröße 0,84 bis 0,42 mm, zusammen mit 58,67 g Hexylenglykol aufgebracht.

**Beispiel 9**

. Ein iprodionhaltiger gepulverter Pestizidansatz wurde nach den Lehren der vorliegenden Erfindung mit folgenden Bestandteilen hergestellt:

| Iprodion 98,8% | 71.75 g |
|---|---|
| Methylcarbitol | 81,34 g |
| TSD | 61,74 g |
| wasserhaltiges SiO2 | 136,38 g |

Das Tensid und das wasserhaltige SiO2 entsprachen denen in Beispiel 7 und sie wurden entsprechend umgesetzt in dem 351,22 g des gepulverten Pestizidansatzes zu 6,8 g desgleichen Maiskolbenträgers unter Verwendung von 400 ml Hexylenglykol aufgebracht wurden.

Die Ansätze nach den Beispielen 7 bis 9 wurden dann alle den gleichen Test wie in den Beispielen 4 bis 6 unterworfen. Die Ergebnisse sind nachstehend aufgeführt:

| Beispiel | mg/l Wirkstoff |
|---|---|
| 7 ( wenig TSD) | 5.0 |
| 8 (verfestiges EC) | 11.2 |
| 9 (Erfindung) | 21.2 |

Diese Ergebnisse zeigen erneut daß gegenüber den Ansätzen die nicht unter die Erfindung fallen anulierte, Träger mit der verstärkten Freigabe merklich mehr Wirkstoff abgibt. Die aus Freilandversuchen stammenden Werte für das Beispiel 9 entsprechen der aus den obigen Werten geschlossenen Aktivität.

**Beispiel 10**

Ein granulierter Maiskolbenansatz mit 3,84% des Wachstumsreglers PP-333 (Bezeichnung für die Verbindung 1-t-Butyl-2(1,2,4-triazol-1-yl)-2-p-chlorbenzyläthanol), Aufbringmenge 0,055g/qm wurde aus folgenden Bestandteilen hergestellt:

| PP-333 95% | 72,41 g |
| Methylcarbitol | 250.00 g |
| TSD | 100.00 g |
| wasserhaltiges SiO2 | 300.00 g |

Das Tensid und das SiO2 entsprachen dem im Beispiel 7 verwendeten. Der Wirkstoff PP-333 wurde in Methylcarbitol gelöst. Das nichtionische TSD wurde zugefügt und solange gerührt, bis eine homogene Mischung erzielt wurde. Diese Lösung wurde dann zur Ausbildung des pestiziden Pulvers auf den hydratisierten SiO2-Staub gesprüht. Diese Pulver wurde dann als aktiver Bestandteil bei dem Granulatansatz eingesetzt. 677,4 g des pestiziden Staubes wurden zusammen mit 5,5 kg granulierter Maiskolben in einem Bandmischer vermischt. Auf diese Mischung wurden 800 ml Hexylenglykol gesprüht.

Wie in den vorgehenden Beispielen wurden zur Bestimmung der Freigabemenge des Wirkstoffes von dem Maiskolbenträger Auswaschuntersuchungen vorgenommen. Es wurde ein Vergleich angestellt mit den Auswaschstudien, die mit den gleichen Ansätzen von granulierten Maiskolben in Verbindung mit PP-333 als 50%iges benetzbares Pulver des aktiven Wirkstoffes durchgeführt wurden. Die folgenden Ergebnisse geben in Prozentzahlen die Menge des Wirkstoffes an, der mit 25 mm Wasser ausgelaugt wird:

| | % PP-333 im Ansatz | % ausgelaugt |
| --- | --- | --- |
| benetzbares Pulver 50% | 0.452 | 44.3 |
| Erfindung (Beispiel 10) | 0.372 | 76.4 |

Zusätzliche Vergleichstests wurden mit Rasenflecken von Blaugrass durchgeführt, um sowohl die Wachstumssteuerung am Anfang und am Schluß der Wachstumsperiode zu bestimmen. Die unten angegebenen Ergebnisse zeigen, daß am Anfang der Wachstumsperiode viel früher eine Reaktion auf den Ansatz nach der Erfindung eintritt, ohne daß die Restaktivität negativ beeinflußt wird, verglichen sowohl mit dem Ansatz 50% WP wie einem unbehandelten Vergleichsfleck. Die Testergebnisse decken eine Zeitspanne von ca. 10 Wochen.

| Aufbringung 6. Januar | Höhe mm 31. Januar | Höhe mm 18. Februar | Höhe mm 16. März |
| --- | --- | --- | --- |
| 50% WP | 62 | 65 | 53 |
| Erfindung (Beispiel 10) | 47 | 45 | 40 |
| Vergleichsfleck | 83 | 90 | 75. |

Andere Pestizide, eingeschlosen die Insektizide Diazinon und die Herbizide Triclopyr, Dacthal, Atrazin und Napropamid wurden ebenfalls mit Erfolg in die granulierten Ansätze nach der Erfindung eingearbeitet und zeigten eine verstärkte Freigabe ihrerseits. Zusätzlich erwiesen sich andere Träger einschließlich Vermikulit und ein granuliertes Harnstoff-Formaldehyd-Düngemittel als für die Herstellung von Ansätzen geeignet, die die erfindungsgemäßen verstärkten Freigabeeigenschaften besitzen. Ihre höchste Eignung findet die Erfindung in Verbindung mit Pestiziden, wie z.B. Fenvalerat, für die bislang keine geeignete granulierte Form gefunden wurde.

**Patentansprüche**

1. Granuliertes Pflanzenschutzmittel mit einem Trägergranulat, auf dessen Oberfläche ein gepulverter Pestizidansatz aus einem pulverförmigen inerten Träger in dessen Poren ein flussiges Pestizid und ein Tensid absorbiert sind unter Verwendung eines Haftmittels aufgebracht ist, dadurch gekennzeichnet, daß das Pestizid ein flüssiges wasserunlösliches Pestizid ist, daß die Teilchengröße des inerten Trägers zwischen 4 und 150 um liegt wobei sein Anteil am Gesamtgewicht des pulverförmigen Pestizidansatzes 35 bis 66 Gew.% beträgt, daß die Teilchengröße des Trägergranulats zwischen 210 und 2000 um liegt und daß das Tensid nichtionisch ist und in einer Menge von mindestens 75 Gew.% des Pestizids und von 12 bis 45 Gew.% des gesamten gepulverten Pestizidansalzes vorliegt.

2. Pflanzenschutzmittel nach Anspruch 1, dadurch gekennzeichnet, daß das Tensid mindestens in der zweifachen Menge des Pestizids vorliegt.

3. Pflanzenschutzmittel nach einem der Ansprüche 1 oder 2, gekennzeichnet durch einen Anteil an anionischem Tensid.

4. Pflanzenschutzmittel nach einem der Ansprüche 1 bis 3, dadurch gekennzeichnet, daß die Hauptmenge des Trägergranulats eine Größe von mindestens 0,21 mm besitzt.

5. Pflanzenschutzmittel nach einem der Ansprüche 1 bis 4, dadurch gekennzeicnet, daß das Verhältnis von Pestizidansatz zu Trägergranulat zwischen 0,05 und 0,15 liegt.

**Claims**

1) A granular pesticide comprising a carrier in granular form on the surface of which a powdered pesticide formulation is deposited consisting of a powdered inert carrier, in the pores of which a fluid pesticide and a surfactant are absorbed using a sticking agent, characterized in that the pesticide is a water insoluble pesticide, that the particle size of the inert carrier lies between 4 and 150 μm, the amount by total weight of the powdered pesticide formulation being 35 to 66 % of the weight, that the particle size of the carrier granules lies between 210 and 200 μm and that the surfactant is nonionic and being present in an amount of 12 to 45 % of the total amount of the powdered particide formulation.

2) The pesticide of claim 1, characcterized in that the surfactant is present in an amount of at least twice the weight of the pesticide.

3) The pesticide of one of the claims 1 or 2, characterized by an amount of anionic surfactant.

4) The pesticide of one of the claims 1 to 3, characterized in that the main amount of the granules of the carrier have a size of at least 0.21 mm.

5) The pesticide of one of the claims 1 to 4, characterized in that the ratio of the pesticide formulation to granules of the carrier lies between 0.05 and 0.15.

**Revendications**

1. Produit protecteur pour plantes, en granulés, comprenant un granulat porteur, à la surface duquel est apporté, grâce à un agent adhésif, une composition pesticide comprenant un porteur inerte en poudre dans les pores duquel un pesticide liquide et un agent tensio-actif sont absorbés, caractérisé en ce que le pesticide est un pesticide liquide insoluble dans l'eau, la taille des particules du porteur inerte se situe entre 4 et 150 μm alors que sa proportion dans le poids total de la composition pesticide se situe entre 35 et 66% en poids, la taille des particules du granulat porteur se situe entre 210 et 2000 μm et l'agent tensio-actif est non ionique et présent à raison d'au moins 75% en poids du pesticide et de 12 à 45% en poids de la composition de pesticide en poudre.

2. Produit protecteur pour plantes selon la revendication 1, caractérisé en ce que l'agent tensio-actif est présent à raison de deux fois au moins la ouantité de pesticide.

3. Produit protecteur pour plantes selon la revendication 1 ou 2, caractérisé par une proportion d'un agent tensio-actif anionique.

4. Produit protecteur pour plantes selon l'une des revendications 1 à 3, caractérisé en ce que la majorité des particules du granulat porteur ont une dimension d'au moins 0,21 mm.

5. Produit protecteur pour plantes selon l'une des revendications 1 à 4, caractérisé en ce que la proportion entre la composition pesticide et le granulat porteur se situe entre 0,05 et 0,15.